# EUROPEAN PATENT APPLICATION

(11) **EP 4 790 592 A1**
(43) Date of publication of application: **12.08.2026**
(21) Application number: 26156268.0
(22) Date of filing: 04.02.2026
(51) Int. Cl.: G06N 3/0455, G06N 3/094, G06N 3/0475, G06V 10/82, G06V 20/64

(54) **MACHINE LEARNING PROGRAM, METHOD, AND DEVICE**

(30) Priority: 06.02.2025 JP 2025018468
(71) Applicant: Fujitsu Limited, Kawasaki-shi, Kanagawa 211-8588 (JP)
(72) Inventor: ISHII, Yoshiyuki, Kawasaki-shi, Kanagawa 211-8588 (JP); WADA, Yuichiro, Kawasaki-shi, Kanagawa 211-8588 (JP); WADA, Mutsuyo, Kawasaki-shi, Kanagawa 211-8588 (JP); YAMAZAKI, Kimihiro, Kawasaki-shi, Kanagawa 211-8588 (JP); KATOH, Takashi, Kawasaki-shi, Kanagawa 211-8588 (JP); TOMA, Mitsunori, Kawasaki-shi, Kanagawa 211-8588 (JP); YOSHIKAWA, Hiyori, Kawasaki-shi, Kanagawa 211-8588 (JP); NAKAGAWA, Akira, Kawasaki-shi, Kanagawa 211-8588 (JP)
(74) Representative: Hoffmann Eitle

(57) **Abstract**

A machine learning device includes a processor that executes a procedure. The procedure including: specifying, among a plurality of points that are present within a predetermined distance from a first point in a latent space of an autoencoder, a second point that satisfies a predetermined relationship with the first point; and updating at least a parameter of a decoder of the autoencoder by optimization of an objective function including a regularization term to reduce a difference between the first point and the second point in the latent space.

## Description

### FIELD

The embodiments discussed herein relate to a machine learning program, a machine learning method, and a machine learning device.

### BACKGROUND

Conventionally, a three-dimensional structure of an object has been reconstructed from two-dimensional projection images of the three-dimensional object captured by CryoEM (Cryogenic Electron Microscope) or CT (Computed Tomography). For example, in the field of drug discovery, a technique has been proposed for estimating changes in the three-dimensional structure of an object by an autoencoder including an encoder that converts projection images of proteins and the like into data in a low-dimensional latent space, and a decoder that reconstructs a three-dimensional structure from data in the latent space.

### [Related Non-Patent Documents]

Keizo Kato, Jing Zhou, Tomotake Sasaki, Akira Nakagawa, "Rate-distortion optimization guided autoencoder for isometric embedding in Euclidean latent space", Proceedings of the 37th International Conference on Machine Learning, PMLR 119:5166-5176, 2020.

However, in conventional techniques, there are cases where a portion of the sequence of changes in the three-dimensional structure estimated by the autoencoder exhibits changes that are unnatural from the viewpoint of experimental researchers, that is, non-smooth changes. This is referred to as non-smoothness problem. As a technique for eliminating the non-smoothness problem, there exists a technique called virtual adversarial training (VAT), which smooths a local distribution of posterior probabilities for each input data point. However, since the output space of the autoencoder is high-dimensional, simply applying VAT results in an enormous computational cost to eliminate the non-smoothness problem.

### SUMMARY

In one aspect, the disclosed technology is intended to eliminate the non-smoothness problem in an autoencoder that reconstructs a three-dimensional structure from two-dimensional projection images, while suppressing computational cost.

According to an aspect of the embodiments, a non-transitory recording medium storing a program that causes a computer to execute a machine learning process, the machine learning process comprising: specifying, among a plurality of points that are present within a predetermined distance from a first point in a latent space of an autoencoder, a second point that satisfies a predetermined relationship with the first point; and updating at least a parameter of a decoder of the autoencoder by optimization of an objective function including a regularization term to reduce a difference between the first point and the second point in the latent space.

In one aspect, the disclosed technology has the effect that the non-smoothness problem in an autoencoder that reconstructs a three-dimensional structure from two-dimensional projection images can be eliminated while suppressing computational cost.

### BRIEF DESCRIPTION OF DRAWINGS

Fig. 1 is a diagram illustrating an autoencoder that estimates a 3D structure.
Fig. 2 is a diagram illustrating estimation of continuous changes in the 3D structure.
Fig. 3 is a diagram illustrating VAT.
Fig. 4 is a functional block diagram of an information processing apparatus according to the present embodiment.
Fig. 5 is a block diagram illustrating a schematic configuration of a computer that functions as the information processing apparatus according to the present embodiment.
Fig. 6 is a flowchart illustrating an example of a machine learning process.
Fig. 7 is a flowchart illustrating an example of an estimation process.
Fig. 8 is a flowchart illustrating another example of a machine learning process.

### DETAILED DESCRIPTION OF THE INVENTION

In the following, with reference to the drawings, an example of an embodiment relating to the disclosed technology will be described.

Before describing details of the embodiment, the technology that serves as a premise for the present embodiment, and the problems thereof, will be described.

For example, in the field of drug discovery, proteins that are deeply involved in life activities of organisms and in mechanisms of disease are highly flexible and interact with other molecules in vivo by being able to adopt various conformations. For example, in order for a virus that infects humans to enter a body, the conformation of a protein on a virus surface changes and binds to a protein on a cell surface. Therefore, in order to efficiently design a drug that suppresses infection, it is important to know the diverse conformational changes of proteins on the virus surface.

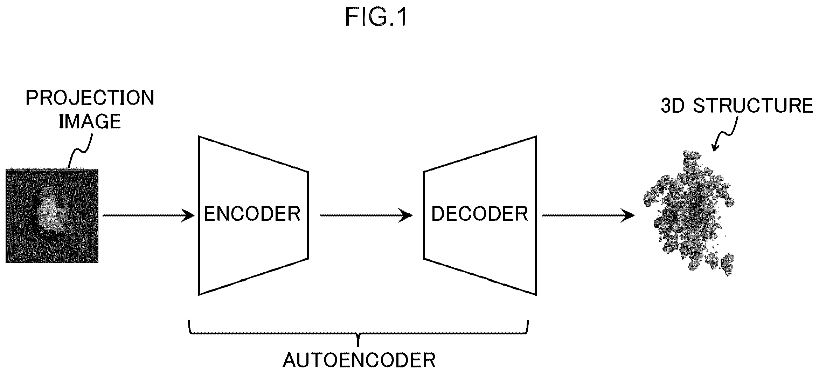

Accordingly, as illustrated in Fig. 1, for example, two-dimensional projection images of an object such as a protein, captured by CryoEM, etc., are used as training data, and an autoencoder is trained so as to reconstruct a three-dimensional density structure (hereinafter also referred to as "three-dimensional structure" or "3D structure") of the object. The autoencoder includes an encoder that converts projection images into data in a low-dimensional latent space, and a decoder that reconstructs a 3D structure from data in the latent space. By training the autoencoder with a large amount of training data, a probability density distribution that indicates, for the various conformations of the 3D structure that the object can take, the probability of each conformation is obtained in the output space. At the same time, a low-dimensional probability density distribution is also obtained in the latent space. The probability density distribution is estimated, for example, as a Gaussian mixture distribution.

For example, the autoencoder is trained to minimize an objective function illustrated in Formula (1) below.
[Formula 1] $L = {\left‖W⊙\left(\hat{X}-X\right)\right‖}_{2}^{2} - βlog {Q}_{z}$

In Formula (1), X is an FT image, which is a Fourier transform (FT image) of a projection image that is training data, and X^ is an FT image estimated by the autoencoder. Note that "X^" is a symbol in which a "^ (hat)" is placed over "X" in the mathematical expression. The same notation is used below for other symbols as well. W is a metric correction matrix, and the (s, t)-th element of W is 4√(s² + t²). The symbol indicated by a dot in a circle denotes a Hadamard product, and β is a positive hyperparameter. z is a latent variable of the autoencoder, logQ_{z} is a rate, and Q_{z} is given by Formula (2) below.
[Formula 2] ${Q}_{{z}_{i}} = {\int }_{- ∞}^{∞} U \left(z-{z}_{i}\right) {P}_{ψ} \left(z\right) dz$

U(z) is a rectangular window function of a width T. When -T/2 ≤ zⱼ ≤ T/2 holds for all zⱼ, U(z) = 1 holds; otherwise, U(z) = 0 holds. Here, zⱼ is
the j-th element of z.

As described above, the probability density distribution in the latent space of the trained autoencoder has isometry with a distribution in an input space of the training data.

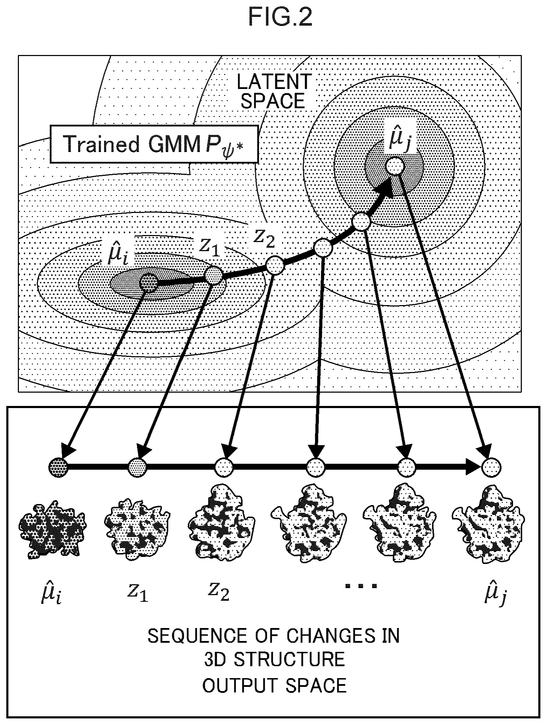

Further, by using the probability density distribution in the latent space to specify a most plausible path between two points in the latent space, and by reconstructing, by the decoder, data corresponding to a plurality of points on the path, a sequence of continuous changes in the 3D structure is obtained. For example, as illustrated in Fig. 2, a path from a point u^ᵢ to a point u^ⱼ in the latent space, which is estimated as a Gaussian mixture distribution as illustrated in Formula (3) below, is specified as in Formula (4) below. $\begin{matrix}{P}_{\hat{ψ}} \left(z\right) = {\sum }_{c = 1}^{C} {\hat{π}}_{c} N \left(z; {\hat{μ}}_{c}; {\hat{Σ}}_{c}\right) & \left(3\right) \\ {z}_{0} = {\hat{μ}}_{i} \to {z}_{1} \to {z}_{2} … \to {z}_{K - 1} \to {z}_{K} = {\hat{μ}}_{j} & \left(4\right)\end{matrix}$

Note that the most plausible path from u^ᵢ to u^ⱼ is probabilistically specified so that the sum of probabilities along the path illustrated in Formula (5) below is maximized, and that the path length illustrated in Formula (6) below is minimized. $\begin{matrix}Sum of probabilities along the path = {\sum }_{k = 0}^{K} {P}_{\hat{ψ}} \left({z}_{k}\right) & \left(5\right) \\ Length of path = {\sum }_{k = 0}^{K} {\left‖{z}_{k}-{z}_{k - 1}\right‖}_{2} & \left(6\right)\end{matrix}$

Then, by applying the trained decoder to the specified path, a sequence of continuous changes in the 3D structure, as illustrated in Formula (7) below, is obtained.
[Formula 5] ${\hat{V}}_{{\hat{μ}}_{i}} \to {\hat{V}}_{{z}_{1}} \to ⋯ \to {\hat{V}}_{{z}_{K - 1}} \to {\hat{V}}_{{\hat{μ}}_{j}}$

Here, because a 3D structure V^_{z} can be estimated from the latent variable z by using the trained decoder, z and V^_{z} can be identified with each other. Furthermore, the Gaussian mixture distribution estimated as the latent space can, by its isometry, be interpreted as an existence distribution of the 3D structure V^_{z} in the output space. That is, Formula (8) below holds.
[Formula 6] ${\left‖z-z′\right‖}_{2} ∝ {\left‖{\hat{V}}_{z}-{\hat{V}}_{z ′}\right‖}_{2}$

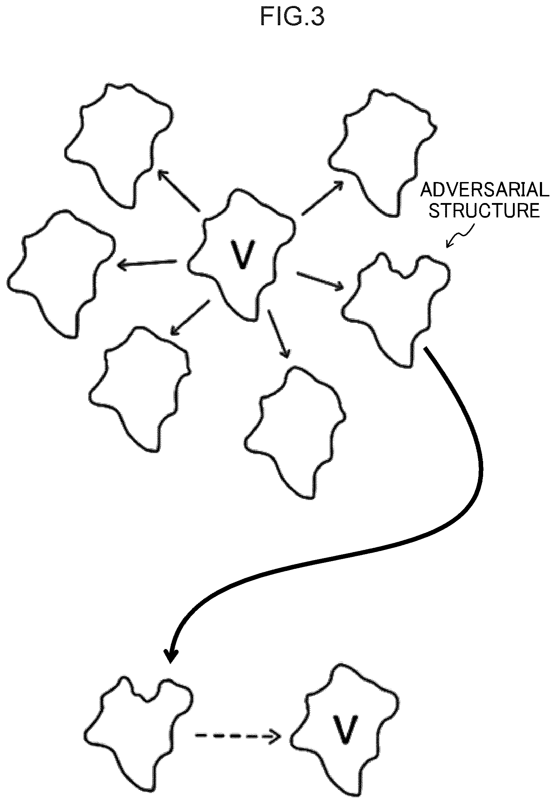

When the sequence of continuous changes in the 3D structure inherent in low-dimensional source data in the latent space is estimated by the decoder of the autoencoder, a non-smoothness problem may arise in which a process of non-smooth change is observed. As a solution to the non-smoothness problem, application of VAT is considered. In VAT, with respect to an output p(y|x) for a reference input data x, an output p(y|x+r) for x+r, where a small perturbation r is applied to x, is examined, and a constraint is imposed such that the most adversarial output p(y|x+r_{adv}) approaches the output p(y|x) for the reference input data. For example, as illustrated in Fig. 3, a neighborhood structure of a certain structure V is explored, the structure most adversarial to V is found, and the parameters of the decoder are updated so that the adversarial structure approaches V. However, when these processes are performed in the output space, which is a three-dimensional space, a correct 3D structure is used; yet it is generally difficult to collect raw 3D structure data. In addition, processing in the output space involves an enormous computational cost.

Accordingly, in the present embodiment, VAT is applied to the latent space so that the non-smoothness problem is eliminated while suppressing the computational cost. Details of an information processing apparatus 10 according to the present embodiment are described below.

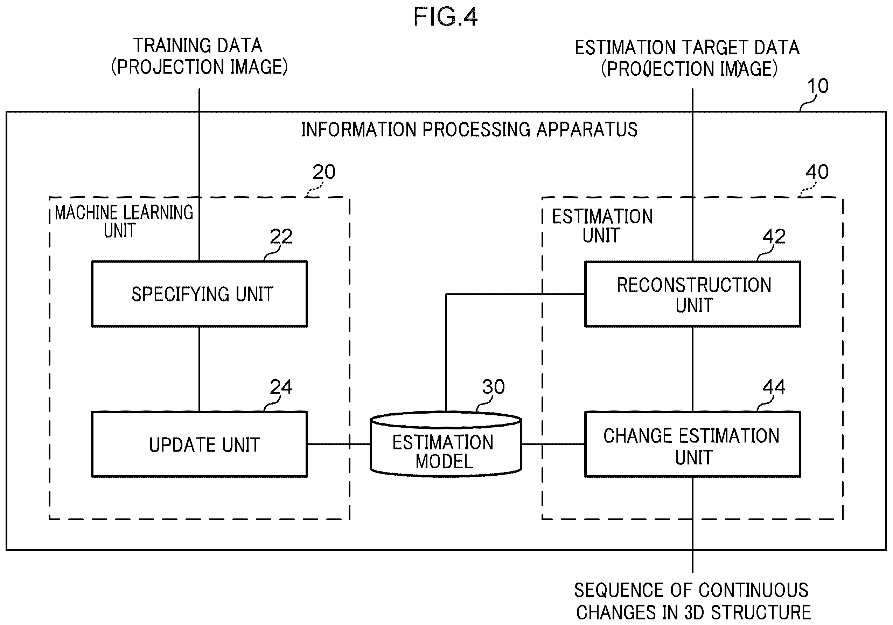

As illustrated in Fig. 4, the information processing apparatus 10 functionally includes a machine learning unit 20 and an estimation unit 40. The machine learning unit 20 is an example of the "machine learning device" of the disclosed technology. In a predetermined storage region of the information processing apparatus 10, an estimation model 30 is stored.

The estimation model 30 is a machine learning model using a neural network or the like. For example, as described with reference to Fig. 1, the estimation model 30 is an autoencoder including an encoder that converts projection images into data in a low-dimensional latent space, and a decoder that reconstructs a 3D structure from data in the latent space.

The machine learning unit 20 is a functional unit that functions during training of the estimation model 30. During training, for example, two-dimensional projection images of a 3D structure of an object such as a protein, captured by CryoEM, etc., are input to the information processing apparatus 10 as training data. The machine learning unit 20 further includes a specifying unit 22, and an update unit 24.

The specifying unit 22 specifies, among a plurality of points that are present within a predetermined distance from a first point in the latent space of the estimation model 30, which is an autoencoder, a second point that satisfies a predetermined relationship with the first point. In the predetermined relationship, a first three-dimensional structure corresponding to the first point in the latent space and a second three-dimensional structure corresponding to the second point are adversarial structures. In the predetermined relationship, the 3D structures, reconstructed by the decoder from data of the first point and the second point in the latent space, are adversarial structures. For example, the specifying unit 22 specifies, as the second point, a point for which the difference (change) from the first point is maximized.

It is to be noted that the second point is not limited to a point for which the difference from the first point is maximal. For example, one or a plurality of points whose difference from the first point is the n-th largest (n ≥ 2), or one or a plurality of points selected randomly, may be specified as the second point. However, from the viewpoints of computational efficiency, achieving the effect of eliminating the non-smoothness problem, and specifying a point appropriate as an adversarial structure, it is preferable to specify, as the second point, a point for which the difference from the first point is maximized. Hereinafter, a case will be described as an example in which a point for which the difference from the first point is maximized is specified as the second point.

Specifically, the specifying unit 22 randomly samples a point z in the latent space. The point z is an example of the first point. The point z may be a point on the latent space corresponding to the training data, that is, a so-called experienced point, or a point on the latent space not corresponding to the training data, that is, a so-called sample point. In the latent space, the specifying unit 22 generates a plurality of points z+ε by a vector ε in an arbitrary direction (∥ε∥₂ ≤b, where b is a hyperparameter taking a positive value). For example, the specifying unit 22 may generate a small random number and determine ε on the basis of the random number. The point z+ε is an example of the second point. The specifying unit 22 calculates, for each of the plurality of points z+ε, a respective difference D_{θ}(ε;z) with the point z. Here, θ is a parameter of the decoder.

Here, to specify an adversarial structure, D_{θ}(ε;z) is, in essence, as illustrated in Formula (9) below, the difference between a volume V_{θ}(z+ε) of the 3D structure reconstructed by the decoder from the point z+ε and a volume Ve(z) of the 3D structure reconstructed by the decoder from the point z. However, as described above, the computational cost in the output space is enormous. In the present embodiment, by utilizing the isometry between the input space and the latent space, an approximate formula of Formula (10) below is used. $\begin{matrix}{D}_{θ} \left(ε; z\right) : = {\left‖{V}_{θ}\left(z+ε\right)-{V}_{θ}\left(z\right)\right‖}_{2}^{2} & \left(9\right) \\ {D}_{θ} \left(ε; z\right) \approx {\left‖W⊙\left({X}_{θ}\left(z+ε\right)-{X}_{θ}\left(z\right)\right)\right‖}_{2}^{2} & \left(10\right)\end{matrix}$

In Formula (10), X_{θ}(z) is an FT image in the input space corresponding to the point z in the latent space. The specifying unit 22 sets ε* to be the ε that maximizes D_{θ}(ε;z), as illustrated in Formula (11) below.
[Formula 8] ${ε}^{∗} : = arg {max}_{{\left‖ε\right‖}_{2} \leq b} {D}_{θ} \left(ε; z\right)$

The update unit 24 updates at least the parameters of the decoder of the autoencoder serving as the estimation model 30 by optimizing an objective function that includes a regularization term for reducing the difference between the first point and the second point in the latent space. Specifically, the update unit 24 updates the parameters of the estimation model 30 so as to minimize the objective function illustrated in Formula (12) below.
[Formula 9] $L = {\left‖W⊙\left(\hat{X}-X\right)\right‖}_{2}^{2} - βlog {Q}_{z} + λ {D}_{θ} \left({ε}^{∗}; z\right)$

In Formula (12), the third term on the right-hand side is a regularization term, and λ is a hyperparameter representing the weight of the regularization term in the objective function. The first term and the second term are the same as in Formula (1).

The estimation unit 40 is a functional unit that functions during estimation of the 3D structure using the estimation model 30. During estimation, estimation target data, which is a projection image relating to the object whose 3D structure is to be estimated, is input to the information processing apparatus 10, for example. The estimation unit 40 further includes a reconstruction unit 42 and a change estimation unit 44.

The reconstruction unit 42 inputs the estimation target data to the estimation model 30 trained by the machine learning unit 20, and reconstructs the 3D structure of the object.

The change estimation unit 44 specifies a path from a point in the latent space corresponding to the estimation target data to an arbitrary point, and estimates and outputs a sequence of continuous changes in the 3D structure corresponding to the specified path.

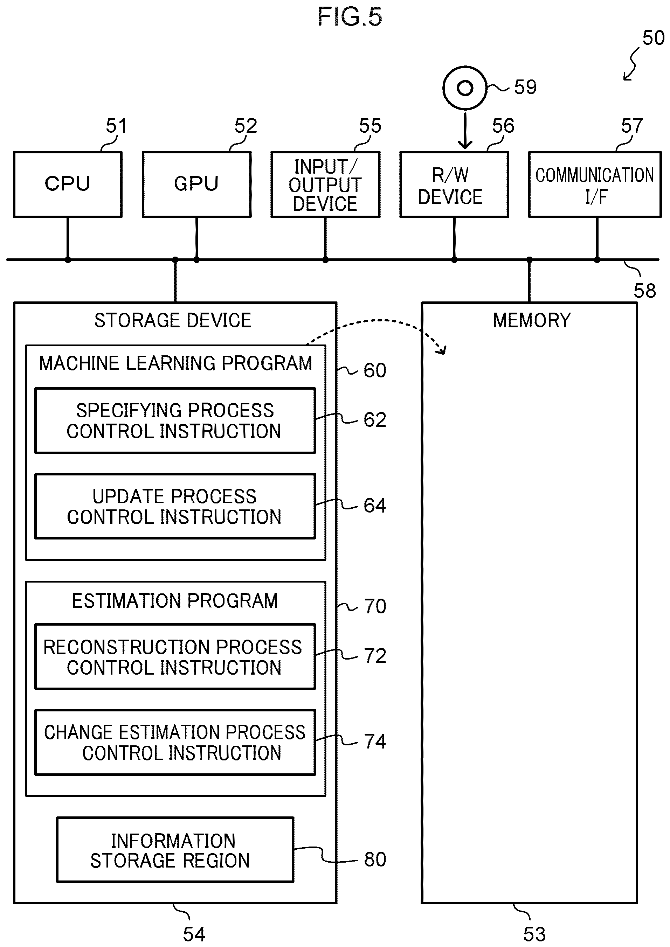

The information processing apparatus 10 may be implemented by, for example, a computer 50 illustrated in Fig. 5. The computer 50 includes a CPU (Central Processing Unit) 51, a GPU (Graphics Processing Unit) 52, a memory 53 serving as a temporary storage region, and a nonvolatile storage device 54. The computer 50 further includes an input/output device 55 such as an input device and a display device, and an R/W (Read/Write) device 56 that controls the reading of data from and the writing of data to a storage medium 59. The computer 50 further includes a communication I/F (Interface) 57 connected to a network such as the Internet. The CPU 51, the GPU 52, the memory 53, the storage device 54, the input/output device 55, the R/W device 56, and the communication I/F 57 are connected to each other via a bus 58.

The storage device 54 is, for example, an HDD (Hard Disk Drive), an SSD (Solid State Drive), a flash memory, or the like. The storage device 54, as a storage medium, stores a machine learning program 60 and an estimation program 70 for causing the computer 50 to function as the information processing apparatus 10. The machine learning program 60 includes a specifying process control instruction 62 and an update process control instruction 64. The estimation program 70 includes a reconstruction process control instruction 72 and a change estimation process control instruction 74. The storage device 54 also has an information storage region 80 in which information constituting the estimation model 30 is stored.

The CPU 51 reads the machine learning program 60 from the storage device 54, loads it into the memory 53, and sequentially executes the control instructions included in the machine learning program 60. By executing the specifying process control instruction 62, the CPU 51 operates as the specifying unit 22 illustrated in Fig. 4. By executing the update process control instructions 64, the CPU 51 operates as the update unit 24 illustrated in Fig. 4.

The CPU 51 also reads the estimation program 70 from the storage device 54, loads it into the memory 53, and sequentially executes the control instructions included in the estimation program 70. By executing the reconstruction process control instruction 72, the CPU 51 operates as the reconstruction unit 42 illustrated in Fig. 4. By executing the change estimation process control instruction 74, the CPU 51 operates as the change estimation unit 44 illustrated in Fig. 4.

The CPU 51 further reads information from the information storage region 80 and loads the estimation model 30 into the memory 53. As a result, the computer 50 that has executed the machine learning program 60 and the estimation program 70 functions as the information processing apparatus 10. It should be noted that the CPU 51 that executes the program is hardware. In addition, a portion of the program may be executed by the GPU 52.

It should be noted that the functions implemented respectively by the machine learning program 60 and the estimation program 70 may be implemented by, for example, a semiconductor integrated circuit, more specifically by an ASIC (Application Specific Integrated Circuit), an FPGA (Field-Programmable Gate Array), or the like.

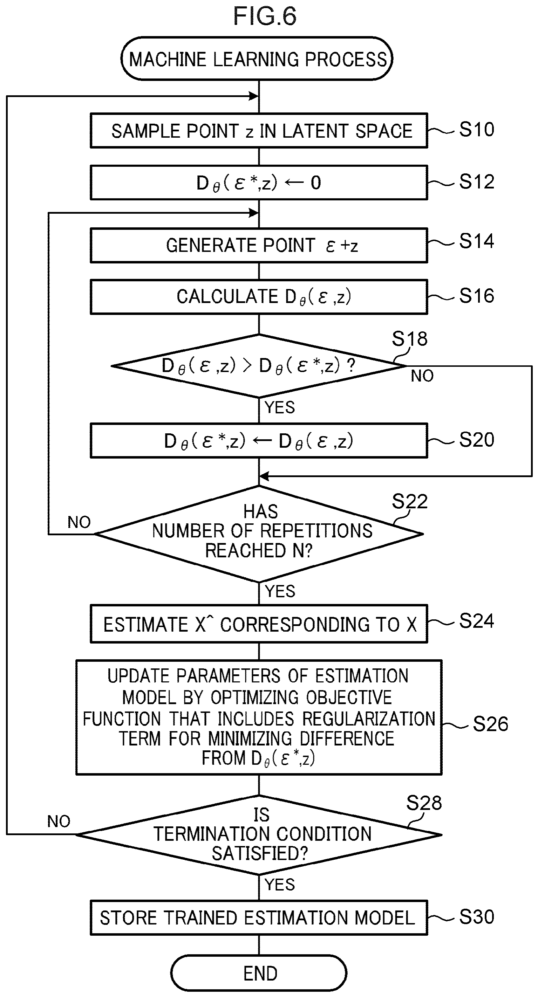

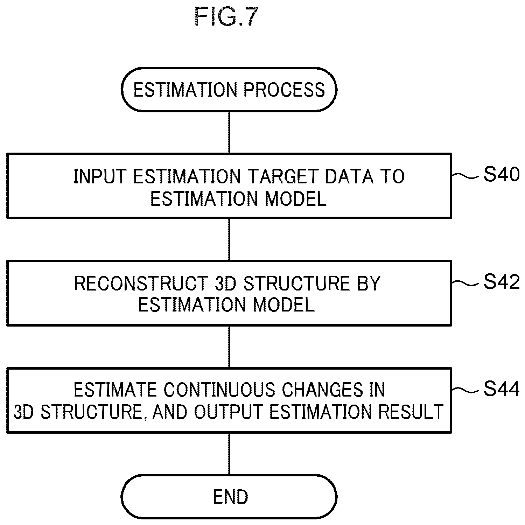

Next, operations of the information processing apparatus 10 according to the present embodiment will be described. In a training phase, when training data are input to the information processing apparatus 10, the machine learning process illustrated in Fig. 6 is executed in the information processing apparatus 10. The machine learning process is one example of the machine learning method of the disclosed technology. In an estimation phase, when estimation target data are input to the information processing apparatus 10, the estimation process illustrated in Fig. 7 is executed in the information processing apparatus 10.

First, the machine learning process illustrated in Fig. 6 will be described.

In step S10, the specifying unit 22 randomly samples the point z in the latent space. Next, in step S12, the specifying unit 22 sets D_{θ}(ε*,z), which indicates the maximum value of the difference between the point z and the point z+ε, to 0. Next, in step S14, the specifying unit 22 generates a small random number and, on the basis of the random number, determines the vector ε in the latent space, and generates the point z+ε from the point z and the vector ε.

Next, in step S16, the specifying unit 22 calculates, for the point z+ε generated in step S14 described above, a difference D_{θ}(ε,z) between the point z and the point z+ε. Then, in step S18, the specifying unit 22 determines whether the calculated D_{θ}(ε,z) is greater than the current D_{θ}(ε*,z). When D_{θ}(ε,z) > D_{θ}(ε*,z) holds, the flow proceeds to step S20; when D_{θ}(ε,z) ≤ D_{θ}(ε*,z) holds, step S20 is skipped and the flow proceeds to step S22.

In step S20, the specifying unit 22 updates D_{θ}(ε,z) as the new D_{θ}(ε*,z), and the flow proceeds to step S22. In step S22, it is determined whether the number of repetitions of the processing in steps S14 to S20 described above has reached N. N is a number predetermined as the number of points to be generated in the neighborhood of the point z. When the repetition has been performed N times, the flow proceeds to step S24; when the number of repetitions has not reached N, the flow returns to step S 14.

Next, in step S24, the update unit 24 inputs a training data X to the estimation model 30 and acquires an estimated value X^ of a 3D structure corresponding to the training data X. Next, in step S26, using the current D_{θ}(ε*,z) and the estimation result in step S24 described above, the update unit 24 updates the parameters of the estimation model 30 so as to minimize an objective function that includes a regularization term for minimizing D_{θ}(ε*,z).

Next, in step S28, the update unit 24 determines whether a termination condition for training of the estimation model 30 is satisfied. Examples of the termination condition include: the number of repetitions of parameter updates has reached a predetermined number of times, the value of the objective function has become equal to or less than a predetermined value, or the difference between the previous value of the objective function and the current value of the objective function has become equal to or less than a predetermined value. When the termination condition is satisfied, the flow proceeds to step S30; when the termination condition is not satisfied, the flow returns to step S10.

In step S30, the update unit 24 stores, in a predetermined storage region, the estimation model 30 in which the finally updated parameters have been set, that is, the trained estimation model 30, and the machine learning process ends. It is not limited to storing the estimation model 30 with the parameters set; alternatively, the finally updated parameters may be stored in a predetermined storage region, and the parameters may be set in the estimation model 30 at the time of estimation processing.

Next, the estimation process illustrated in Fig. 7 will be described.

In step S40, the reconstruction unit 42 inputs the estimation target data to the estimation model 30 trained by the machine learning unit 20. Next, in step S42, the reconstruction unit 42 acquires the 3D structure reconstructed by the estimation model 30. Next, in step S44, the change estimation unit 44 specifies a path from a point in the latent space corresponding to the estimation target data to an arbitrary point, estimates a sequence of continuous changes in the 3D structure corresponding to the specified path, outputs the estimation result, and the estimation process ends.

As described above, according to the information processing apparatus of the present embodiment, the machine learning unit specifies, among a plurality of points that are present within a predetermined distance from the first point in the latent space of the autoencoder, the second point that satisfies a predetermined relationship with the first point. The machine learning unit then updates at least the parameters of the decoder of the autoencoder by optimization of the objective function including the regularization term for reducing the difference between the first point and the second point in the latent space. Accordingly, in the continuous changes in the 3D structure estimated by the estimation model, continuity in the neighborhood of the structure corresponding to the first point is improved. Therefore, the non-smoothness problem in the autoencoder that reconstructs a three-dimensional structure from two-dimensional projection images can be eliminated while suppressing computational cost.

In the above embodiment, a case has been described in which, when specifying an adversarial structure of the point z in the latent space, among points in the neighborhood of the point z, a point whose difference from the point z is the largest is specified; however, the present invention is not limited thereto. For example, the adversarial structure of the point z may be specified by a mathematical method. Specifically, the specifying unit 22 calculates, at points generated randomly in the latent space, a gradient in a function that indicates a difference between each point and the first point in the latent space, and specifies the second point on the basis of the gradient.

More specifically, in the latent space, the specifying unit 22 randomly generates unit vectors having the same number of dimensions as the latent variable z. The specifying unit 22 then computes a gradient v as illustrated in Formula (13) below by backpropagation, and determines ε* according to Formula (14) below. $\begin{matrix}v = {\left.{∇}_{ε}{D}_{θ}\left(ε; z\right)\right|}_{ε = ξu} & \left(13\right) \\ {ε}^{∗} = bv / {\left‖v\right‖}_{2} & \left(14\right)\end{matrix}$

In Formula (13), ξ is a hyperparameter that takes a positive value. In computing D_{θ}(ε;z), as in the embodiment described above, the approximate formula of Formula (10) is used.

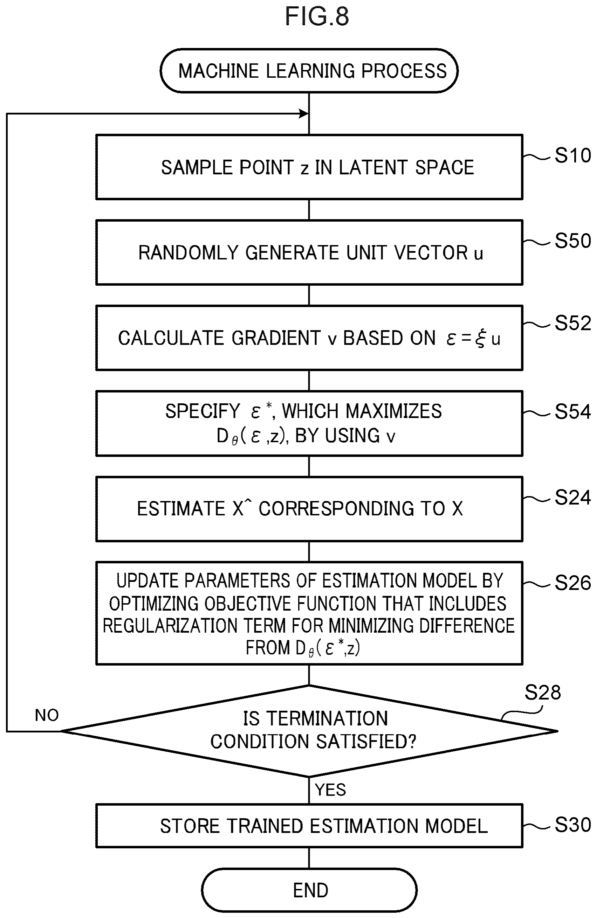

The flow of the machine learning process in this case is illustrated in Fig. 8. In the machine learning process illustrated in Fig. 8, a process similar to the machine learning process (Fig. 6) in the above embodiment is assigned the same step numbers, and detailed description thereof is omitted.

In step S50, the specifying unit 22 randomly generates, in the latent space, unit vectors having the same number of dimensions as the latent variable z. Next, in step S52, the specifying unit 22 specifies the point z+ε from the vector ε=ξu and the point z, and calculates the gradient v at the point z+ε in the function D_{θ}(ε;z). Next, in step S54, the specifying unit 22 specifies ε*, which maximizes D_{θ}(ε;z), by using the gradient v in accordance with Formula (14). Thereafter, as in the above embodiment, in steps S24 to S30, the parameters of the estimation model 30 are updated.

In the above embodiment, a case has been described in which the parameters of the estimation model 30 are updated so as to minimize the objective function obtained by adding, to a term for minimizing the loss between the training data and the estimated value, the regularization term for minimizing D_{θ}(ε*;z). That is, a case in which the parameters of the encoder of the autoencoder and the parameters of the decoder are updated together, with the regularization taken into account. However, the method of parameter updating is not limited thereto. For example, after updating the parameters of the entire estimation model 30 so as to minimize the objective function of Formula (1), the parameters of the encoder may be fixed, and, with respect to the regularization term, the parameters of the decoder may be updated. In this case, for updating the parameters of the decoder, the objective function of Formula (12) may be used, or an objective function consisting only of the regularization term may be used.

It should be noted that, in the above embodiment, a case has mainly been described as an example in which a 3D structure of a protein is estimated from projection images captured by CryoEM; however, the disclosed technology is not limited thereto. For example, the disclosed technology is also applicable to a case of estimating a 3D structure of a human body by using, as input, CT images that capture numerous cross-sectional slices of the human body.

In the above embodiment, a case has been described in which the machine learning unit and the estimation unit are configured on the same computer; however, the machine learning unit and the estimation unit may be configured respectively on different computers. In this case, the estimation model trained by the machine learning device may be stored in advance in the estimation device, or the estimation device may read the estimation model at the time of estimation.

In the above embodiment, the machine learning program is stored (installed) in the storage device in advance; however, the disclosed technology is not limited thereto. A program according to the disclosed technology may be provided in a form stored on a storage medium such as a CD-ROM, a DVD-ROM, or a USB memory.

All examples and conditional language provided herein are intended for the pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

### Reference Signs List

- 10: Information processing apparatus
- 20: Machine learning unit
- 22: Specifying unit
- 24: Update unit
- 30: Estimation model
- 40: Estimation unit
- 42: Reconstruction unit
- 44: Change estimation unit
- 50: Computer
- 51: CPU
- 52: GPU
- 53: Memory
- 54: Storage device
- 55: Input/output device
- 56: R/W device
- 57: Communication I/F
- 58: Bus
- 59: Storage medium
- 60: Machine learning program
- 62: Specifying process control instruction
- 64: Update process control instruction
- 70: Estimation program
- 72: Reconstruction process control instruction
- 74: Change estimation process control instruction
- 80: Information storage region

## Claims

1. A machine learning program for causing a computer to execute processing, the processing including:
specifying, among a plurality of points that are present within a predetermined distance from a first point in a latent space of an autoencoder, a second point that satisfies a predetermined relationship with the first point; and
updating at least a parameter of a decoder of the autoencoder by optimization of an objective function including a regularization term to reduce a difference between the first point and the second point in the latent space.

2. The machine learning program of claim 1, wherein the predetermined relationship is that the difference between the first point and the second point is maximized.

3. The machine learning program of claim 1, wherein the predetermined relationship is that a first three-dimensional structure corresponding to the first point and a second three-dimensional structure corresponding to the second point are adversarial structures.

4. The machine learning program of claim 2, wherein specifying the second point includes:
generating the plurality of points;
calculating, for each of the plurality of points, respective differences between the points and the first point; and
specifying, as the second point, a point that has a largest difference from the first point.

5. The machine learning program of claim 2, wherein specifying the second point includes:
calculating, at a point generated randomly in the latent space, a gradient of a function that indicates a difference between each point and the first point in the latent space; and
specifying the second point based on the gradient.

6. The machine learning program of any one of claims 1 to 5, wherein the regularization term has approximated a difference between a first output of the autoencoder corresponding to the first point and a second output of the autoencoder corresponding to the second point by a Hadamard product of a metric correction matrix and a difference between a value in an input space corresponding to the first point and a value in an input space corresponding to the second point.

7. The machine learning program of any one of claims 1 to 5, wherein, in a case in which a two-dimensional image relating to an object having a three-dimensional structure has been input, the autoencoder reconstructs and outputs a three-dimensional structure of the object.

8. An estimation program for causing a computer to execute processing, the processing including: inputting, to a trained autoencoder that has been trained by the computer executing the machine learning program of any one of claims 1 to 7, a two-dimensional image relating to an object having a three-dimensional structure; and estimating a three-dimensional structure of the object.

9. A machine learning method for a computer to execute processing, the processing including:
specifying, among a plurality of points that are present within a predetermined distance from a first point in a latent space of an autoencoder, a second point that satisfies a predetermined relationship with the first point; and
updating at least a parameter of a decoder of the autoencoder by optimization of an objective function including a regularization term to reduce a difference between the first point and the second point in the latent space.

10. The machine learning method of claim 9, wherein the predetermined relationship is that the difference between the first point and the second point is maximized.

11. The machine learning method of claim 9, wherein the predetermined relationship is that a first three-dimensional structure corresponding to the first point and a second three-dimensional structure corresponding to the second point are adversarial structures.

12. The machine learning method of claim 10, wherein specifying the second point includes:
generating the plurality of points;
calculating, for each of the plurality of points, respective differences between the points and the first point; and
specifying, as the second point, a point that has a largest difference from the first point.

13. The machine learning method of claim 10, wherein specifying the second point includes:
calculating, at a point generated randomly in the latent space, a gradient of a function that indicates a difference between each point and the first point in the latent space; and
specifying the second point based on the gradient.

14. An estimation method for causing a computer to execute processing, the processing including: inputting, to a trained autoencoder that has been trained by the computer executing the machine learning method of any one of claims 9 to 13, a two-dimensional image relating to an object having a three-dimensional structure; and estimating a three-dimensional structure of the object.

15. A machine learning device including a processor, the processor being configured to execute processing, the processing including:
specifying, among a plurality of points that are present within a predetermined distance from a first point in a latent space of an autoencoder, a second point that satisfies a predetermined relationship with the first point; and
updating at least a parameter of a decoder of the autoencoder by optimization of an objective function including a regularization term to reduce a difference between the first point and the second point in the latent space.
